# EUROPEAN PATENT APPLICATION

(11) **EP 4 528 344 A1**
(43) Date of publication of application: **26.03.2025**
(21) Application number: 23829719.6
(22) Date of filing: 09.05.2023
(51) Int. Cl.: G02B 6/293

(54) **WAVELENGTH SELECTIVE DEVICE AND CORRESPONDING SWITCHING DEVICE**

(30) Priority: 28.06.2022 CN 202210743255
(71) Applicant: Huawei Technologies Co., Ltd., Shenzhen, Guangdong 518129 (CN)
(72) Inventor: WANG, Xiao, Shenzhen, Guangdong 518129 (CN); ZHANG, Peng, Shenzhen, Guangdong 518129 (CN); XIAO, Xinhua, Shenzhen, Guangdong 518129 (CN)
(74) Representative: Körber, Martin Hans
(86) International application number: PCT/CN2023/093004
(87) International publication number: WO 2024/001533

(57) **Abstract**

A wavelength selective device is provided, and includes an input/output array (10), a switching control assembly (20), a dispersion device (30), and an optical polyhedron (40). The optical polyhedron (40) includes a first curved surface (401) and at least one light-transmission surface. The input/output array (10), the switching control assembly (20), and the dispersion device (30) are mounted on the at least one light-transmission surface. The input/output array (10) is configured to: input a multi-wavelength optical signal to the optical polyhedron (40) and receive at least one single-wavelength optical signal from the optical polyhedron (40); the switching control assembly (20) is configured to modulate an optical signal incident to the switching control assembly (20); the dispersion device (30) is configured to disperse an optical signal incident to the dispersion device (30); and the first curved surface (401) is configured to shape and change a direction of an optical signal incident to the first curved surface (401). The wavelength selective device includes a small quantity of assemblies, and is easy to assemble. Reflection of an optical signal occurs inside the optical polyhedron (40), and performance stability is good.

## Description

This application claims priority to Chinese Patent Application No. 202210743255.1, filed with the China National Intellectual Property Administration on June 28, 2022 and entitled "WAVELENGTH SELECTIVE DEVICE AND CORRESPONDING SWITCHING DEVICE", which is incorporated herein by reference in its entirety.

### TECHNICAL FIELD

This application relates to the field of communication technologies, and specifically, to a wavelength selective device and a corresponding switching device.

### BACKGROUND

A reconfigurable optical add/drop multiplexer (reconfigurable optical add/drop multiplexer, ROADM) is a common device in an optical network. The ROADM may be configured at different network layers, and implements intelligent network management through configurable and manageable functions of a wavelength.

A wavelength selective switch (wavelength selective switch, WSS) has become a main device of the ROADM because of advantages of a wide frequency band, low dispersion, and support port-wavelength independence.

Currently, the WSS usually uses a plurality of discrete optical devices, and wavelength selection can be implemented only after a plurality of times of propagation in the air. Positioning and commissioning of these optical devices are complex, resulting in poor performance stability of the WSS.

### SUMMARY

This application provides a wavelength selective device, configured to implement, in a simple structure, selection of optical signals with different wavelengths. This application further provides a corresponding switching device.

A first aspect of this application provides a wavelength selective device, including an input/output array, a switching control assembly, a dispersion device, and an optical polyhedron. The optical polyhedron includes a first curved surface and at least one light-transmission surface. The input/output array, the switching control assembly, and the dispersion device are mounted on the at least one light-transmission surface. The input/output array is configured to: input a multi-wavelength optical signal to the optical polyhedron and receive at least one single-wavelength optical signal from the optical polyhedron; the switching control assembly is configured to modulate an optical signal incident to the switching control assembly; the dispersion device is configured to disperse an optical signal incident to the dispersion device; and the first curved surface is configured to shape and change a direction of an optical signal incident to the first curved surface.

In this application, the wavelength selective device may be a wavelength selective switch (wavelength selective switch, WSS), or may be another device having a wavelength selective function. The input/output array may include one input port and a plurality of output ports. For example, the input/output array includes (N+1) ports. One of the (N+1) ports is an input port, and N ports are output ports. The (N+1) ports are optical fiber ports. The switching control assembly may include a modulator, for example, a liquid crystal on silicon (liquid crystal on silicon, LCOS) modulator. The dispersion device may be a grating.

In this application, the optical polyhedron is a polyhedron that has a plurality of surfaces and in which an optical signal can be transmitted. A material of the optical polyhedron may be glass, or may be another polymer that can transmit light. The optical polyhedron may be a prism. The "light-transmission surface" in the optical polyhedron is a surface that can be penetrated by an optical signal. The "first curved surface" is a surface with a specific curvature, and the first curved surface may change a direction of and shape an incident optical signal. "Shape" refers to changing a spot shape of the optical signal. The first curved surface may change a spot of one shape into a spot of another shape, for example, change a circular spot into an elliptical spot, or certainly, may change into a spot of another shape, or change a larger circular spot into a smaller circular spot through a plurality of times of shaping. Specific spot shapes before and after change are not limited in this application. Direction change means that the first curved surface may reflect an optical signal, and the first curved surface may shape an optical signal incident to the first curved surface and then reflect a shaped optical signal.

In this application, the multi-wavelength optical signal is an optical signal including a plurality of different wavelengths. For example, the multi-wavelength optical signal is white light, and the multi-wavelength optical signal may include an optical signal with a red light wavelength, an optical signal with a green light wavelength, and an optical signal with a blue light wavelength.

In this application, the input/output array, the switching control assembly, and the dispersion device can be mounted on the optical polyhedron to complete a wavelength selective function. A quantity of assemblies is small, and assembly is simple. In addition, an optical signal transmission process occurs in an interior of the optical polyhedron, does not need to be performed in the external air, and is not affected by atmospheric pressure and an external environment, thereby improving stability of the wavelength selective device.

In a possible implementation of the first aspect, the optical polyhedron includes one light-transmission surface. The input/output array, the switching control assembly, and the dispersion device are mounted on the light-transmission surface.

In a possible implementation of the first aspect, the optical polyhedron includes a first light-transmission surface and a second light-transmission surface. Two of the input/output array, the switching control assembly, and the dispersion device are mounted on the first light-transmission surface, and a remaining one is mounted on the second light-transmission surface.

In a possible implementation of the first aspect, the optical polyhedron includes three light-transmission surfaces. The input/output array, the switching control assembly, and the dispersion device are respectively mounted on different light-transmission surfaces in the three light-transmission surfaces.

In the foregoing three possible implementations, a plurality of different mounting positions of the input/output array, the switching control assembly, and the dispersion device are provided, to increase structural diversity of the wavelength selective device.

In a possible implementation of the first aspect, the optical polyhedron further includes a second curved surface. The second curved surface is configured to shape and change a direction of an optical signal incident to the second curved surface.

In a possible implementation of the first aspect, the first curved surface is curved around a first direction, the second curved surface is curved around a second direction, and the first direction is not parallel to the second direction.

In a possible implementation of the first aspect, the first direction is perpendicular to the second direction, or the first direction is nearly perpendicular to the second direction.

In this application, the "second curved surface" is also a surface with a specific curvature. The curvature of the first curved surface may be the same as or different from the curvature of the second curved surface.

In this application, the first curved surface and the second curved surface may be understood as curved surfaces of two types. A quantity of first curved surfaces and a quantity of second curved surfaces are not limited. There may be one or more first curved surfaces and one or more second curved surfaces. The first direction and the second direction may be any two directions that are not parallel in space. For example, when the first direction is perpendicular to the second direction, one of the first direction and the second direction may be an X-axis direction, and the other may be a Y-axis direction. The second curved surface and the first curved surface may be cylinders (cylinders). The cylinder is a curved surface formed by straight lines moving in parallel along a fixed curve, namely, a curved surface formed by moving straight lines moving in parallel along a fixed curve. The moving straight line is referred to as a generatrix of the cylinder, and the fixed curve is referred to as a directrix of the cylinder. When the directrix is a circle, an obtained cylinder is referred to as a cylindrical surface.

In this application, the first curved surface may also be understood as a curved surface that can change an optical signal that is in a dispersion direction and that is in optical signals. The second curved surface may also be understood as a curved surface that can change an optical signal that is in a port direction and that is in optical signals. Therefore, the first curved surface may also be referred to as a dispersion curved surface, and the second curved surface may also be referred to as a port curved surface. The "port direction" is generally a direction in which the input port and the output port of the input/output array are arranged. The "dispersion direction" is generally a direction in which the optical signal is spread along a wavelength. Generally, the "port direction" is perpendicular to the "dispersion direction". Certainly, the "port direction" may not be perpendicular to the "dispersion direction". This is not limited in this application. The direction in which the input port and the output port are arranged is an approximate direction. The input port and the output port may be arranged in a straight line, or in a straight line having a small radian. An approximate direction of these ports is the direction in which the input port and the output port are arranged.

In this application, the "port direction" and the "dispersion direction" are any directions in an XY plane when the optical signal is propagated in a Z-axis direction in an XYZ coordinate system. For example, if the "port direction" is an X-axis direction, the "dispersion direction" is a Y-axis direction; or if the "port direction" is a Y-axis direction, the "dispersion direction" is an X-axis direction. Certainly, the "port direction" and the "dispersion direction" may alternatively be directions that have a specific angle with an X axis or a Y axis in the XY plane. Regardless of whether the "port direction" and the "dispersion direction" have an angle with the X axis or the Y axis, provided that the first curved surface and the second curved surface may shape a spot of one shape into a spot of another shape incident to LCOS, for example, change a circular spot into an elliptical spot incident to the LCOS, or certainly, may change into a spot of another shape, or change a larger circular spot into a smaller circular spot incident to the LCOS through a plurality of changes, specific shapes before and after shaping are not limited in this application.

In the foregoing possible implementation, the first curved surface and the second curved surface may shape optical components in different directions of the optical signal, so that the switching control assembly can smoothly modulate the incident optical signal.

In a possible implementation of the first aspect, the dispersion device is a curved-surface grating. The curved-surface grating is configured to disperse and shape an optical signal incident to the curved-surface grating.

In this possible implementation, the curved-surface grating is a grating that can implement both dispersion and shaping functions. The curved-surface grating may be a grating having a curved grating line on a flat plate substrate, or may be a grating having a straight grating line on a bent substrate material. The curved-surface grating can implement a function of the second curved surface. In this way, processing difficulty of the optical polyhedron can be reduced.

In a possible implementation of the first aspect, the optical polyhedron further includes a reflective surface. The reflective surface is configured to reflect the optical signal incident to the curved-surface grating and/or an optical signal emergent from the curved-surface grating.

In this possible implementation, when the dispersion device is a curved-surface grating, the optical polyhedron needs to include the reflective surface to reflect the optical signal incident to the curved-surface grating or an optical signal obtained through dispersion by the curved-surface grating. Certainly, the reflective surface may also reflect another optical signal, and is not limited to reflecting only the optical signal obtained through dispersion.

In a possible implementation of the first aspect, the input/output array, the switching control assembly, and the dispersion device are glued to, bonded to, or mounted, via a fastening device, on the at least one light-transmission surface.

In this possible implementation, gluing may be fastening the input/output array, the switching control assembly, and the dispersion device on the light-transmission surface of the optical polyhedron through glue. Bonding is press-fitting the input/output array, the switching control assembly, and the dispersion device on the light-transmission surface of the optical polyhedron through an intermolecular force. The fastening device may be some connecting pieces, and the fastening device may also be connected to the optical polyhedron in a gluing or bonding manner. In this application, a connection manner between the input/output array, the switching control assembly, the dispersion device, and the optical polyhedron has a good closure property, thereby improving stability of the wavelength selective device.

In a possible implementation of the first aspect, the optical polyhedron includes a light-transmission body. An outer surface of the light-transmission body is the second curved surface, or when there are a plurality of second curved surfaces, an outer surface of the light-transmission body is one of the plurality of second curved surfaces.

In a possible implementation of the first aspect, the optical polyhedron includes a light-transmission body, and a curved-surface grating is glued or bonded to the light-transmission body.

In a possible implementation of the first aspect, an interior of the optical polyhedron is hollow at a position through which no optical signal passes.

In this possible implementation, the position that is in the interior of the polyhedron and through which no optical path passes can be hollowed out in an integrated molding process. For example, in an injection molding process, a mold may be shaped as a convex form at the hollowed position. In this way, when an integrated dielectric material is made, a material quantity of a device can be reduced, and costs can be reduced.

In a possible implementation of the first aspect, the input/output array is configured to input a multi-wavelength optical signal to the optical polyhedron, where the multi-wavelength optical signal is reflected in the optical polyhedron to the dispersion device. The dispersion device is configured to disperse the multi-wavelength optical signal into a plurality of optical signals with different wavelengths, where the plurality of optical signals with different wavelengths are reflected in the optical polyhedron to the switching control assembly. The switching control assembly is configured to modulate at least one single-wavelength optical signal in the plurality of optical signals with different wavelengths and then reflect a modulated single-wavelength optical signal back to the optical polyhedron, where the at least one single-wavelength optical signal is output from at least one output port of the input/output array.

In a possible implementation of the first aspect, the switching control assembly includes a modulator and a polarization optical splitting component. The polarization optical splitting component is configured to split an optical signal with each wavelength in the plurality of optical signals with different wavelengths into an optical signal in a first polarization state and an optical signal in a second polarization state. The modulator is configured to modulate the optical signal in the first polarization state.

In this possible implementation, the first polarization state and the second polarization state may be perpendicular to each other, or may not be perpendicular to each other. Generally, the LCOS modulator can modulate an optical signal in only one of the polarization states. Therefore, the polarization optical splitting component needs to first split the optical signal with each wavelength into optical signals in the two polarization states, and then the modulator modulates the optical signal that is in the first polarization state and that can be processed.

In a possible implementation of the first aspect, the switching control assembly further includes a polarization conversion component. The polarization conversion component is configured to convert the optical signal in the second polarization state into the optical signal in the first polarization state.

In this possible implementation, the polarization conversion component may be a wave plate, and the wave plate may be a half-wave plate or a quarter-wave plate. The wave plate may convert the optical signal in the second polarization state into the optical signal in the first polarization state. In this way, an optical signal that is in a polarization state and that cannot be processed by the LCOS can be converted into an optical signal that is in a polarization state and that can be processed by the LCOS, and two processed optical signals continue to be transmitted, so that a reflection amount of the optical signals can be increased, and an energy loss of the optical signals can be reduced.

In a possible implementation of the first aspect, the input/output array includes an input/output assembly and a polarization optical splitting component. The input/output assembly is configured to receive the multi-wavelength optical signal. The polarization optical splitting component is configured to split the multi-wavelength optical signal into an optical signal in a third polarization state and an optical signal in a fourth polarization state, and the optical signal in the third polarization state is capable of being modulated by a modulator in the switching control assembly.

In this application, the third polarization state and the fourth polarization state may be perpendicular to each other, or may not be perpendicular to each other.

In this possible implementation, polarization state division may be performed on the optical signal in the input/output array. In this way, polarization state division does not need to be performed in the switching control assembly.

In a possible implementation of the first aspect, the input/output array further includes a polarization conversion component. The polarization conversion component is configured to convert the optical signal in the fourth polarization state into the optical signal in the third polarization state.

In this possible implementation, the polarization conversion component may be a wave plate, and the wave plate may be a half-wave plate or a quarter-wave plate. The input/output array may also include a polarization conversion component, which converts the optical signal in the fourth polarization state into the optical signal that is in the third polarization state and that can be processed by the LCOS. In this way, an optical signal that is in a polarization state and that cannot be processed by the LCOS can be converted into an optical signal that is in a polarization state and that can be processed by the LCOS, and two processed optical signals continue to be transmitted, so that a reflection amount of the optical signals can be increased.

A second aspect of this application provides a wavelength selective device, including: an input/output array, a switching control assembly, a dispersion device, and an optical polyhedron. The input/output array, the switching control assembly, and the dispersion device are mounted on the optical polyhedron. The input/output array is configured to input a multi-wavelength optical signal to the optical polyhedron, where the multi-wavelength optical signal is reflected in the optical polyhedron to the dispersion device. The dispersion device is configured to disperse the multi-wavelength optical signal into a plurality of optical signals with different wavelengths, where the plurality of optical signals with different wavelengths are reflected in the optical polyhedron to the switching control assembly. The switching control assembly is configured to: modulate at least one optical signal in the plurality of optical signals with different wavelengths and then reflect a modulated optical signal back to the optical polyhedron, where the at least one optical signal is output from at least one output port of the input/output array.

In this application, the input/output array, the switching control assembly, and the dispersion device can be mounted on the optical polyhedron to complete a wavelength selective function. A quantity of assemblies is small, and assembly is simple. In addition, an optical signal transmission process occurs in an interior of the optical polyhedron, does not need to be performed in the external air, and is not affected by atmospheric pressure and an external environment, thereby improving stability of the wavelength selective device.

In a possible implementation of the second aspect, the optical polyhedron includes a first curved surface and a second curved surface. The first curved surface is configured to shape and change a direction of an optical signal incident to the first curved surface. The second curved surface is configured to shape and change a direction of an optical signal incident to the second curved surface.

In a possible implementation of the second aspect, the first curved surface is curved around a first direction, the second curved surface is curved around a second direction, and the first direction is not parallel to the second direction.

In a possible implementation of the second aspect, the first direction is perpendicular to the second direction, or the first direction is nearly perpendicular to the second direction.

In a possible implementation of the second aspect, there is at least one first curved surface, and there is at least one second curved surface.

In this possible implementation, regardless of a quantity of first curved surfaces, bending directions of these curved surfaces are the same, in other words, the first curved surfaces are all curved around the first direction. When there are a plurality of second curved surfaces, bending directions of the plurality of second curved surfaces are the same, in other words, the second curved surfaces are all curved around the second direction. In other words, the first curved surfaces and the second curved surfaces jointly implement shaping the optical signal.

In a possible implementation of the second aspect, the dispersion device is a curved-surface grating, and the optical polyhedron includes the first curved surface.

In this possible implementation, the curved-surface grating is a grating that can implement both dispersion and focusing functions. The curved-surface grating may be a grating having a curved grating line on a flat plate substrate, or may be a grating having a straight grating line on a bent substrate material. In this application, a direction of changing the optical signal by the curved-surface grating and a direction of changing the optical signal by the first curved surface may be perpendicular to each other. When the dispersion device is the curved-surface grating, the curved-surface grating can implement a function of the second curved surface. In this way, processing difficulty of the optical polyhedron can be reduced.

In a possible implementation of the second aspect, the dispersion device is a curved-surface grating, and the optical polyhedron includes the first curved surface. A bending direction of the first curved surface is perpendicular to a direction in which an input port and an output port of the input/output array are arranged. The curved-surface grating and the first curved surface are configured to change an optical signal transmitted in the optical polyhedron.

In a possible implementation of the second aspect, the switching control assembly includes a modulator and a polarization optical splitting component. The polarization optical splitting component is configured to split an optical signal with each wavelength in the plurality of optical signals with different wavelengths into an optical signal in a first polarization state and an optical signal in a second polarization state. The modulator is configured to modulate the optical signal in the first polarization state.

In this possible implementation, the first polarization state and the second polarization state may be perpendicular to each other, or may not be perpendicular to each other. Generally, the LCOS modulator can modulate an optical signal in only one of the polarization states. Therefore, the polarization optical splitting component needs to first split the optical signal with each wavelength into optical signals in the two polarization states, and then the modulator modulates the optical signal that is in the first polarization state and that can be processed.

In a possible implementation of the second aspect, the switching control assembly further includes a polarization conversion component. The polarization conversion component is configured to convert the optical signal in the second polarization state into the optical signal in the first polarization state.

In this possible implementation, the polarization conversion component may be a wave plate, and the wave plate may be a half-wave plate or a quarter-wave plate. The wave plate may convert the optical signal in the second polarization state into the optical signal in the first polarization state. In this way, an optical signal that is in a polarization state and that cannot be processed by the LCOS can be converted into an optical signal that is in a polarization state and that can be processed by the LCOS, and two processed optical signals continue to be transmitted, so that a reflection amount of the optical signals can be increased.

In a possible implementation of the second aspect, the input/output array includes an input/output assembly and a polarization optical splitting component. The input/output assembly is configured to receive the multi-wavelength optical signal. The polarization optical splitting component is configured to split the multi-wavelength optical signal into an optical signal in a third polarization state and an optical signal in a fourth polarization state, and the optical signal in the third polarization state is capable of being modulated by a modulator in the switching control assembly.

In this application, the third polarization state and the fourth polarization state may be perpendicular to each other, or may not be perpendicular to each other.

In this possible implementation, polarization state division may be performed on the optical signal in the input/output array. In this way, polarization state division does not need to be performed in the switching control assembly.

In a possible implementation of the second aspect, the input/output array further includes a polarization conversion component. The polarization conversion component is configured to convert the optical signal in the fourth polarization state into the optical signal in the third polarization state.

In this possible implementation, the polarization conversion component may be a wave plate, and the wave plate may be a half-wave plate or a quarter-wave plate. The input/output array may also include a polarization conversion component, which converts the optical signal in the fourth polarization state into the optical signal that is in the third polarization state and that can be processed by the LCOS. In this way, the optical signal that is in a polarization state and that cannot be processed by the LCOS can be converted into the optical signal that is in a polarization state and that can be processed by the LCOS, and two processed optical signals continue to be transmitted, so that a reflection amount of the optical signals can be increased.

In a possible implementation of the second aspect, the optical polyhedron includes at least one light-transmission surface. The input/output array, the switching control assembly, and the dispersion device are glued to, bonded to, or mounted, via a fastening device, on the at least one light-transmission surface.

In a possible implementation of the second aspect, the optical polyhedron includes one light-transmission surface. The input/output array, the switching control assembly, and the dispersion device are mounted on the light-transmission surface.

In a possible implementation of the second aspect, the optical polyhedron includes a first light-transmission surface and a second light-transmission surface. Two of the input/output array, the switching control assembly, and the dispersion device are mounted on the first light-transmission surface, and a remaining one is mounted on the second light-transmission surface.

In a possible implementation of the second aspect, the optical polyhedron includes three light-transmission surfaces. The input/output array, the switching control assembly, and the dispersion device are respectively mounted on different light-transmission surfaces in the three light-transmission surfaces.

In the foregoing three possible implementations, a plurality of different mounting positions of the input/output array, the switching control assembly, and the dispersion device are provided, to increase structural diversity of the wavelength selective device.

In a possible implementation of the second aspect, the at least one light-transmission surface is located on a same side of the optical polyhedron. A plurality of curved surfaces in the first curved surface and the second curved surface are located on a different side from the at least one light-transmission surface. The plurality of curved surfaces are configured to change and reflect the optical signal transmitted in the optical polyhedron.

In this possible implementation, the "different side" may be an "opposite side" or a "non-opposite side" of the at least one light-transmission surface. The "same side" and the "opposite side" are relative concepts. If the "same side" is a left side of the optical polyhedron, the "opposite side" is a right side of the optical polyhedron. If the "same side" is an upper side of the optical polyhedron, the "opposite side" is a lower side of the optical polyhedron. Certainly, a structure described in this possible implementation is not limited in this application. In this application, the at least one light-transmission surface on which the input/output array, the switching control assembly, and the dispersion device are mounted is located on the same side of the optical polyhedron, and the plurality of curved surfaces in the second curved surface and the first curved surface are located on the opposite side, so that reflection efficiency of an optical signal in the interior of the optical polyhedron can be improved, so as to quickly select an optical signal with a corresponding wavelength.

In a possible implementation of the second aspect, the at least one light-transmission surface is located on the same side of the optical polyhedron, and the second curved surface and the first curved surface are located on a same side as the at least one light-transmission surface. The second curved surface and the first curved surface are configured to change and reflect the optical signal transmitted in the optical polyhedron. The optical polyhedron further includes a reflective surface. The reflective surface is configured to reflect an optical signal incident to the curved-surface grating and/or an optical signal emergent from the curved-surface grating.

In this possible implementation, the at least one light-transmission surface on which the input/output array, the switching control assembly, and the dispersion device are mounted is located on the same side of the optical polyhedron, and the second curved surface and the first curved surface are located on the same side as the at least one light-transmission surface, so that a length of the wavelength selective device can be reduced.

In a possible implementation of the second aspect, the optical polyhedron includes a light-transmission body. An outer surface of the light-transmission body is a second curved surface, or when there are a plurality of second curved surfaces, an outer surface of the light-transmission body is one of the plurality of second curved surfaces.

In a possible implementation of the second aspect, the optical polyhedron includes a light-transmission body, and a curved-surface grating is glued or bonded to the light-transmission body.

In a possible implementation of the second aspect, the dispersion device is a curved-surface grating, and the optical polyhedron includes the first curved surface. A direction of the first curved surface is perpendicular to a direction in which the input port and the output port of the input/output array are arranged. The curved-surface grating and the first curved surface are configured to change an optical signal transmitted in the optical polyhedron.

In this possible implementation, when the dispersion device is the curved-surface grating, the curved-surface grating can implement a function of the second curved surface. In this way, processing difficulty of the optical polyhedron can be reduced.

In a possible implementation of the second aspect, an interior of the optical polyhedron is hollow at a position through which no optical signal passes.

In this possible implementation, a position that is in the interior of the polyhedron and through which no optical path passes can be hollowed out in an integrated molding process. For example, in an injection molding process, a mold may be shaped as a convex form at the hollowed position. In this way, when an integrated dielectric material is made, a material quantity of a device can be reduced, and costs can be reduced.

For features and effects in any one of the second aspect and the possible implementations of the second aspect of this application, refer to the descriptions of same features and effects in any one of the first aspect and the possible implementations of the first aspect for understanding.

A third aspect of this application provides a switching device. The switching device includes the wavelength selective device according to any one of the first aspect or the possible implementations of the first aspect.

A fourth aspect of this application provides a switching device. The switching device includes the wavelength selective device according to any one of the second aspect or the possible implementations of the second aspect.

### BRIEF DESCRIPTION OF DRAWINGS

FIG. 1 is a diagram of an architecture of a switching principle of a switching device;
FIG. 2 is a diagram of a structure of a wavelength selective device according to an embodiment of this application;
FIG. 3A to FIG. 3C are a plurality of possible side views or top views of a wavelength selective device according to an embodiment of this application;
FIG. 4A to FIG. 4D are principle diagrams of shaping a beam by a first curved surface and a second curved surface according to an embodiment of this application;
FIG. 5A is another side view or a top view of a wavelength selective device according to an embodiment of this application;
FIG. 5B is another side view or a top view of a wavelength selective device according to an embodiment of this application;
FIG. 6A is another side view or a top view of a wavelength selective device according to an embodiment of this application;
FIG. 6B is another side view or a top view of a wavelength selective device according to an embodiment of this application;
FIG. 7 is another side view or a top view of a wavelength selective device according to an embodiment of this application;
FIG. 8A is another side view or a top view of a wavelength selective device according to an embodiment of this application;
FIG. 8B is another side view or a top view of a wavelength selective device according to an embodiment of this application;
FIG. 9 is another side view or a top view of a wavelength selective device according to an embodiment of this application;
FIG. 10 is another side view or a top view of a wavelength selective device according to an embodiment of this application;
FIG. 11 is another side view or a top view of a wavelength selective device according to an embodiment of this application; and
FIG. 12 is a diagram of simulation of an incident process and an emergent process of an optical signal according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may know that with development of technologies and emergence of new scenarios, the technical solutions provided in embodiments of this application are also applicable to resolving similar technical problems.

Embodiments of this application provide a wavelength selective device, configured to implement, in a simple structure, selection of optical signals with different wavelengths. This application further provides a corresponding switching device. Details are separately described below.

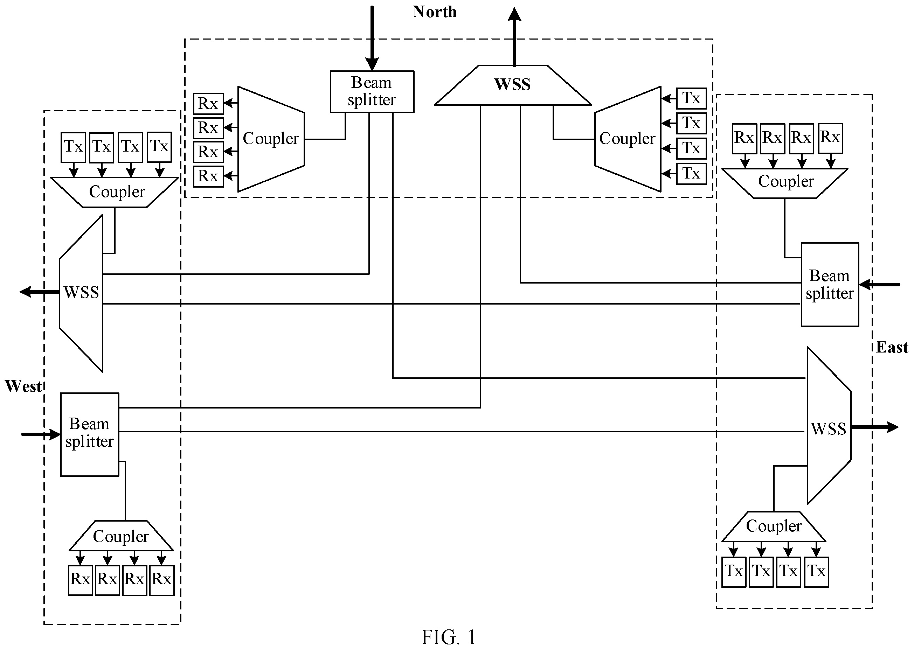

The wavelength selective device provided in embodiments of this application may be used in a switching device in a communication network, for example, a switch or a reconfigurable optical add/drop multiplexer (reconfigurable optical add/drop multiplexer, ROADM). A structure of the switching device may be understood with reference to FIG. 1.

FIG. 1 is a diagram of an architecture of a switching principle of a switching device. FIG. 1 shows a switching device having three switching directions.

As shown in FIG. 1, the switching device includes three switching directions: east, west, and north. Each switching direction includes a beam splitter, a coupler, and a wavelength selective device. In FIG. 1, a wavelength selective switch (wavelength selective switch, WSS) is used as an example of the wavelength selective device. Actually, the wavelength selective device may alternatively be another device having a wavelength selective function. The beam splitter may be an optical fiber beam splitter. The coupler may alternatively be replaced with another device having a corresponding function. Each direction can correspond to a different destination, for example, a different city. Tx represents a signal transmit end, and Rx represents a signal receive end.

The beam splitter is configured to split a received optical signal into three beams. One beam is used for local receiving, and the other two beams are transmitted to WSSs in other two directions. The WSS is configured to obtain optical signals with various wavelengths through filtering. For example, optical signals transmitted from the east and the west need to be switched to the north for further transmission. An east multi-wavelength optical signal enters an east beam splitter, and the east beam splitter transmits a multi-wavelength optical signal to an input port of a north WSS. A west multi-wavelength optical signal enters a west beam splitter, and the west beam splitter transmits a multi-wavelength optical signal to the input port of the north WSS. The north WSS obtains, through filtering, optical wavelengths that are received at the input port and need to be switched to the north, and outputs the optical wavelengths through output ports. In other words, the WSS is used to selectively output, from corresponding output ports, optical signals that are with different wavelengths and that are received at the input port, to complete selection of optical signals in different directions. For processes of selecting optical signals in the other two directions, refer to the north switching process for understanding.

The WSS in embodiments of this application may be a liquid crystal on silicon (liquid crystal on silicon, LCOS) switching technology-based 1xN WSS, which includes one input port and N output ports, and the (N+1) ports are formed by an optical fiber array. Alternatively, the WSS may be used as an Nx1 WSS, which includes N input ports and one output port, and the (N+1) ports are formed by an optical fiber array. A wavelength division multiplexing (Wavelength division multiplexing, WDM) signal including a plurality of wavelengths enters the WSS from an input port in the optical fiber array. After selection from the wavelengths of the WDM signal is completed in the WSS, an optical signal with a corresponding wavelength is output from a corresponding output port.

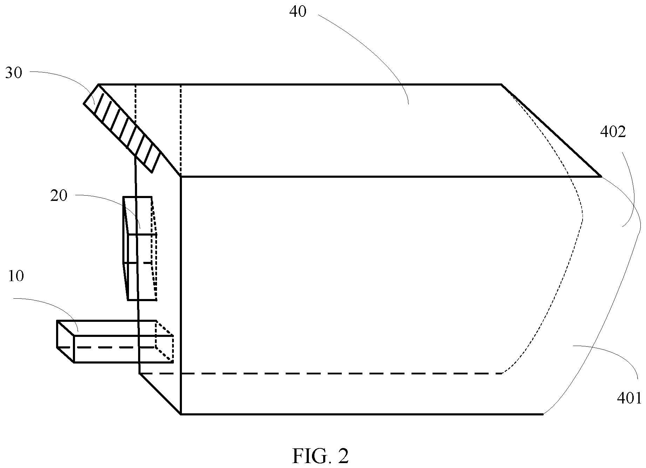

FIG. 2 is a diagram of a structure of a wavelength selective device according to an embodiment of this application.

The wavelength selective device shown in FIG. 2 includes an input/output array 10, a switching control assembly 20, a dispersion device 30, and an optical polyhedron 40. The input/output array 10, the switching control assembly 20, and the dispersion device 30 are mounted on the optical polyhedron 40. The input/output array 10, the switching control assembly 20, the dispersion device 30, and the optical polyhedron 40 may be mounted by being glued to the optical polyhedron 40 through glue, or may be mounted by being bonded to the optical polyhedron 40, or may be mounted on the optical polyhedron 40 with assistance of another fastening device. In this embodiment of this application, the input/output array 10 may be an optical fiber input/output assembly, the switching control assembly 20 may be a modulator, and the dispersion device 30 may be a grating, for example, a reflective diffraction grating.

In embodiments of this application, bonding is a manner of implementing a connection through an intermolecular force.

The optical polyhedron 40 includes a first curved surface 401 and at least one light-transmission surface. The input/output array, the switching control assembly, and the dispersion device are mounted on the at least one light-transmission surface.

Optionally, the optical polyhedron shown in FIG. 2 further includes a second curved surface 402. The second curved surface is configured to shape and change a direction of an optical signal incident to the second curved surface.

It should be noted that FIG. 2 is merely a diagram of a structure of the wavelength selective device. In this application, shapes of surfaces of the optical polyhedron 40 are not limited, and mounting positions of the input/output array 10, the switching control assembly 20, and the dispersion device 30 on the optical polyhedron 40 are not limited.

Regardless of the structure of the wavelength selective device, each assembly has the following functions.

The input/output array 10 is configured to: input a multi-wavelength optical signal to the optical polyhedron, and receive at least one single-wavelength optical signal from the optical polyhedron.

The switching control assembly 20 is configured to modulate an optical signal incident to the switching control assembly.

The dispersion device 30 is configured to disperse an optical signal incident to the dispersion device.

The first curved surface 401 is configured to shape and change a direction of an optical signal incident to the first curved surface.

In a possible embodiment, the input/output array 10 is configured to input a multi-wavelength optical signal to the optical polyhedron, and the multi-wavelength optical signal is reflected in the optical polyhedron to the dispersion device 30. The dispersion device 30 is configured to disperse the multi-wavelength optical signal into a plurality of optical signals with different wavelengths. The plurality of optical signals with different wavelengths are reflected in the optical polyhedron to the switching control assembly 20. The switching control assembly 20 is configured to: modulate at least one single-wavelength optical signal in the plurality of optical signals with different wavelengths and then reflect a modulated single-wavelength optical signal back to the optical polyhedron, and the at least one single-wavelength optical signal is output from at least one output port of the input/output array 10.

In embodiments of this application, the optical polyhedron is a polyhedron that has a plurality of surfaces and in which an optical signal can be transmitted. A material of the optical polyhedron may be glass, or may be another polymer that can transmit light. The optical polyhedron may be a prism. The "light-transmission surface" in the optical polyhedron is a surface that can be penetrated by an optical signal. The "first curved surface" and the "second curved surface" are surfaces having specific curvatures, and the first curved surface and the second curved surface may change a direction of and shape an incident optical signal. The curvature of the first curved surface may be the same as or different from the curvature of the second curved surface.

In embodiments of this application, "shape" refers to changing a spot shape of the optical signal. Both the first curved surface and the second curved surface may change a spot of one shape into a spot of another shape, for example, change a circular spot into an elliptical spot, or certainly, may change into a spot of another shape, or change a larger circular spot into a smaller circular spot through a plurality of times of shaping. Specific spot shapes before and after change are not limited in this application. Direction change means that both the first curved surface and the second curved surface may reflect the optical signal, and the first curved surface and the second curved surface may reflect a shaped optical signal.

In embodiments of this application, the first curved surface is curved around a first direction, the second curved surface is curved around a second direction, and the first direction is not parallel to the second direction. The first direction is perpendicular to the second direction, or the first direction is perpendicular to the second direction.

In embodiments of this application, the first curved surface and the second curved surface may be understood as curved surfaces of two types. A quantity of first curved surfaces and a quantity of second curved surfaces are not limited. There may be one or more first curved surfaces and one or more second curved surfaces. The first direction and the second direction may be any two directions that are not parallel in space. For example, when the first direction is perpendicular to the second direction, one of the first direction and the second direction may be an X-axis direction, and the other may be a Y-axis direction. The second curved surface and the first curved surface may be cylinders (cylinders). The cylinder is a curved surface formed by straight lines moving in parallel along a fixed curve, namely, a curved surface formed by moving straight lines moving in parallel along a fixed curve. The moving straight line is referred to as a generatrix of the cylinder, and the fixed curve is referred to as a directrix of the cylinder. When the directrix is a circle, an obtained cylinder is referred to as a cylindrical surface.

In this application, the first curved surface may also be understood as a curved surface that can change an optical signal that is in a dispersion direction and that is in optical signals. The second curved surface may also be understood as a curved surface that can change an optical signal that is in a port direction and that is in optical signals. Therefore, the first curved surface may also be referred to as a dispersion curved surface, and the second curved surface may also be referred to as a port curved surface. The "port direction" is generally a direction in which the input port and the output port of the input/output array are arranged. The "dispersion direction" is generally a direction in which the optical signal is spread along a wavelength. Generally, the "port direction" is perpendicular to the "dispersion direction". Certainly, the "port direction" may not be perpendicular to the "dispersion direction". This is not limited in this application. The direction in which the input port and the output port are arranged is an approximate direction. The input port and the output port may be arranged in a straight line, or in a straight line having a small radian. An approximate direction of these ports is the direction in which the input port and the output port are arranged.

In this application, the "port direction" and the "dispersion direction" are any directions in an XY plane when the optical signal is propagated in a Z-axis direction in an XYZ coordinate system. For example, if the "port direction" is an X-axis direction, the "dispersion direction" is a Y-axis direction; or if the "port direction" is a Y-axis direction, the "dispersion direction" is an X-axis direction. Certainly, the "port direction" and the "dispersion direction" may alternatively be directions that have a specific angle with an X axis or a Y axis in the XY plane. Regardless of whether the "port direction" and the "dispersion direction" have an angle with the X axis or the Y axis, provided that the first curved surface and the second curved surface may change a spot of one shape into a spot of another shape incident to LCOS, for example, change a circular spot into an elliptical spot incident to the LCOS, or certainly, may change into a spot of another shape, or change a larger circular spot into a smaller circular spot incident to the LCOS through a plurality of changes. Specific shapes before and after change are not limited in this application.

In the foregoing possible implementation, the first curved surface and the second curved surface may shape optical components in different directions of the optical signal, so that the switching control assembly can smoothly modulate the incident optical signal.

In this embodiment of this application, the multi-wavelength optical signal is an optical signal including a plurality of different wavelengths. For example, the multi-wavelength optical signal is white light, and the multi-wavelength optical signal may include an optical signal with a red light wavelength, an optical signal with a green light wavelength, and an optical signal with a blue light wavelength.

In this embodiment of this application, the input/output array, the switching control assembly, and the dispersion device can be mounted on the optical polyhedron to complete a wavelength selective function. A quantity of assemblies is small, and assembly is simple. In addition, an optical signal transmission process occurs in an interior of the optical polyhedron, does not need to be performed in the external air, and is not affected by atmospheric pressure and an external environment, thereby improving stability of the wavelength selective device.

The input/output array 10, the switching control assembly 20, and the dispersion device 30 may be mounted on one light-transmission surface, two light-transmission surfaces, or three light-transmission surfaces. The following describes a plurality of different structures with reference to the accompanying drawings.

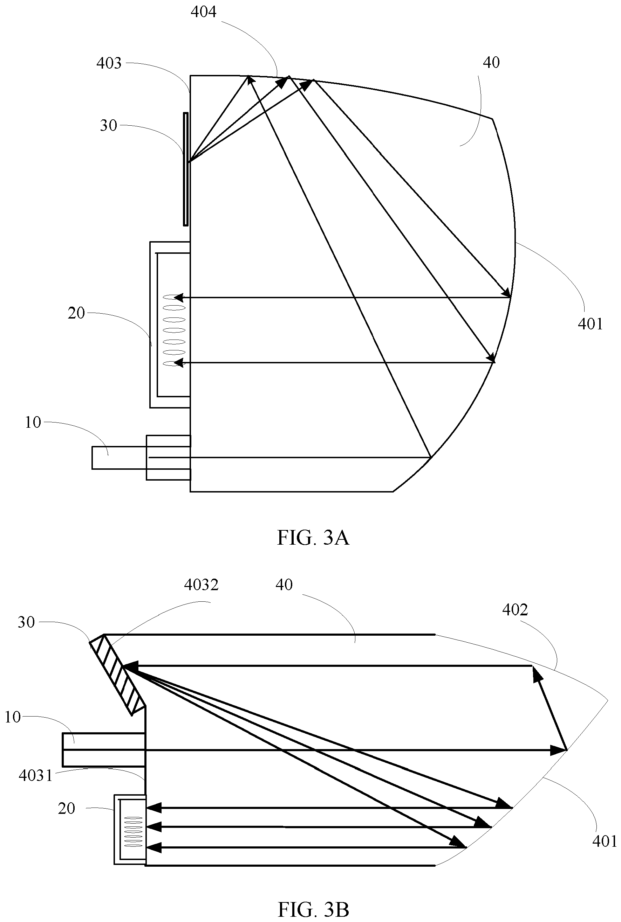

As shown in a side view of a wavelength selective device in FIG. 3A, an optical polyhedron 40 includes a first curved surface 401, one light-transmission surface 403, and a reflective surface 404. An input/output array 10, a switching control assembly 20, and a dispersion device 30 are all mounted on the light-transmission surface 403. It should be noted that the reflective surface 404 may alternatively be a second curved surface.

As shown in FIG. 3A, the input/output array 10 inputs a multi-wavelength optical signal to the optical polyhedron 40. The multi-wavelength optical signal is first incident to the first curved surface 401 in the optical polyhedron 40. The first curved surface 401 shapes the multi-wavelength optical signal, and then changes a direction. Direction change means reflecting a shaped multi-wavelength optical signal. In FIG. 3A, the first curved surface 401 reflects the multi-wavelength optical signal to the reflective surface 403, and then the reflective surface 403 reflects the multi-wavelength optical signal to the dispersion device 30.

The dispersion device 30 performs dispersion splitting on the multi-wavelength optical signal to obtain a plurality of optical signals with different wavelengths. The plurality of optical signals with different wavelengths are reflected to the switching control assembly 20 after encountering the reflective surface 403 and the first curved surface 401.

The switching control assembly 20 applies different voltages to incident areas of the optical signals with different wavelengths, so that the optical signals with different wavelengths may be returned to the optical polyhedron 40 at different modulated angles. The optical signals that are with different wavelengths and that are returned at different modulated angles are reflected in the optical polyhedron to different output ports of the input/output array 10 for output.

It should be noted that, one multi-wavelength optical signal may be dispersed into a plurality of optical signals with different wavelengths. Each of the optical signals with different wavelengths may be returned to the optical polyhedron 40 at a different modulated angle. In this way, the optical signals with different wavelengths are all output from different output ports. Alternatively, only a part of optical signals with different wavelengths may be returned to the optical polyhedron 40 at different modulated angles. In this way, only the part of optical signals with different wavelengths are output from different output ports. Alternatively, a part of optical signals with different wavelengths may be returned to the optical polyhedron 40 at a same modulated angle. In this way, the part of optical signals with different wavelengths are output from a same output port.

FIG. 3A above is a side view of a structure of the optical polyhedron including one light-transmission surface. When the optical polyhedron includes a first light-transmission surface and a second light-transmission surface, two of the input/output array, the switching control assembly, and the dispersion device are mounted on the first light-transmission surface, and a remaining one is mounted on the second light-transmission surface.

For a side view of a structure in this case, refer to FIG. 3B for understanding. As shown in FIG. 3B, an optical polyhedron 40 includes a first curved surface 401, a second curved surface 402, a first light-transmission surface 4031, and a second light-transmission surface 4032. An input/output array 10 and a switching control assembly 20 are mounted on the first light-transmission surface 4031, and a dispersion device 30 is mounted on the second light-transmission surface 4032. Certainly, a manner of mounting on the two light-transmission surfaces herein is merely an example. Alternatively, the input/output array 10 and the dispersion device 30 may be mounted on one light-transmission surface, and the switching control assembly 20 may be mounted on the other light-transmission surface. Alternatively, the switching control assembly 20 and the dispersion device 30 may be mounted on one light-transmission surface, and the input/output array 10 may be mounted on the other light-transmission surface.

In the wavelength selective device of the structure, a multi-wavelength optical signal output by the input/output array 10 enters the optical polyhedron through the first light-transmission surface 4031, and is incident to the dispersion device 30 after being shaped and direction-changed by the first curved surface 401 and the second curved surface 402. The dispersion device 30 disperses the multi-wavelength optical signal, and inputs a plurality of single-wavelength optical signals to the optical polyhedron. Then, the plurality of single-wavelength optical signals are incident to the switching control assembly 20 after being shaped and direction-changed by the first curved surface 401.

The switching control assembly 20 applies different voltages to incident areas of the optical signals with different wavelengths, so that the optical signals with different wavelengths may be returned to the optical polyhedron 40 at different modulated angles. The optical signals that are with different wavelengths and that are returned at different modulated angles are reflected in the optical polyhedron to different output ports of the input/output array 10 for output.

The optical polyhedron 40 may alternatively include three light-transmission surfaces. The input/output array, the switching control assembly, and the dispersion device are respectively mounted on different light-transmission surfaces in the three light-transmission surfaces.

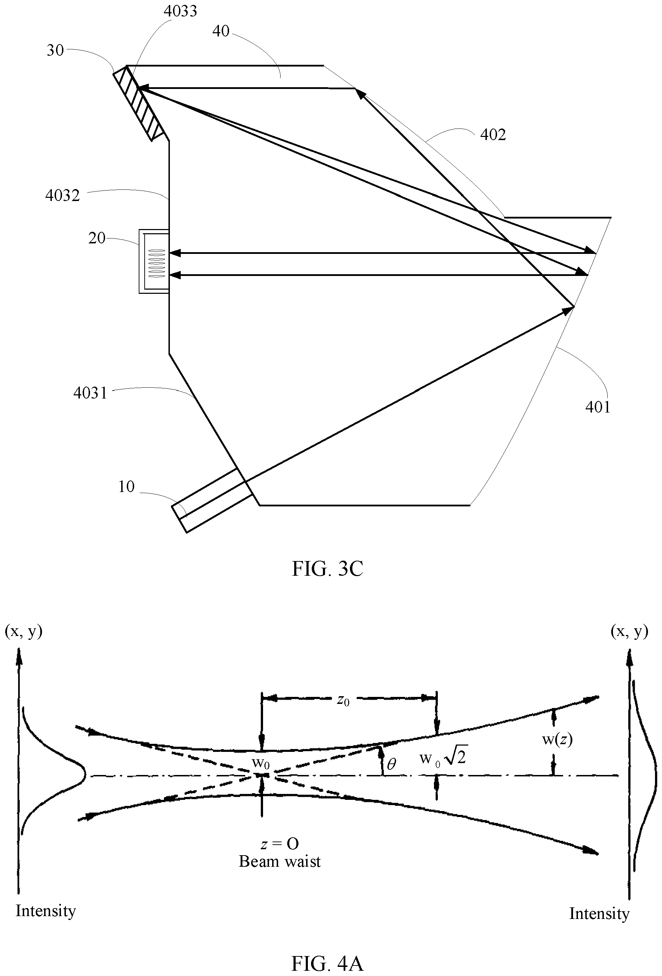

For a side view of a structure in this case, refer to FIG. 3C for understanding. As shown in FIG. 3C, an optical polyhedron 40 includes a first curved surface 401, a second curved surface 402, a first light-transmission surface 4031, a second light-transmission surface 4032, and a third light-transmission surface 4033. The input/output array 10 is mounted on the first light-transmission surface 4031, the switching control assembly 20 is mounted on the second light-transmission surface 4032, and a dispersion device 30 is mounted on the third light-transmission surface 4033.

In the wavelength selective device of the structure, a multi-wavelength optical signal output by the input/output array 10 enters the optical polyhedron through the first light-transmission surface 4031, and is incident to the dispersion device 30 after being shaped and direction-changed by the first curved surface 401 and the second curved surface 402. The dispersion device 30 disperses the multi-wavelength optical signal, and inputs a plurality of single-wavelength optical signals to the optical polyhedron. Then, the plurality of single-wavelength optical signals are incident to the switching control assembly 20 after being shaped and direction-changed by the first curved surface 401.

The switching control assembly 20 applies different voltages to incident areas of the optical signals with different wavelengths, so that the optical signals with different wavelengths may be returned to the optical polyhedron 40 at different modulated angles. The optical signals that are with different wavelengths and that are returned at different modulated angles are reflected in the optical polyhedron to different output ports of the input/output array 10 for output.

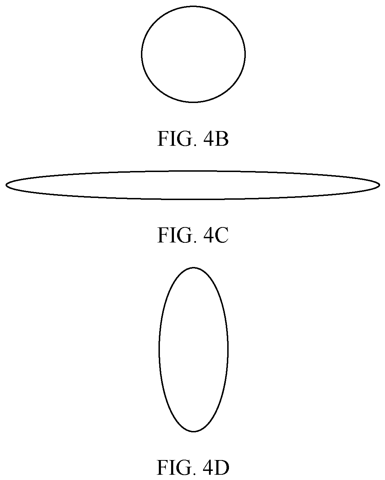

Shaping a spot of the optical signal by the first curved surface 401 and the second curved surface 402 means that a divergence angle of a beam changes. The divergence angle of the beam is a derivative of a radius of the beam to a far-field axial position, for example, an angle θ shown in FIG. 4A. Change by the first curved surface on the beam means that a divergence angle of a dispersion direction of a beam waist changes after the beam encounters a dispersion curved surface. Change by the second curved surface on the beam means that a divergence angle of the beam along a port direction changes after the beam passes through a port curved surface. For example, when a spot shape of a beam incident to the first curved surface or the second curved surface is a circle shown in FIG. 4B, after the incident beam passes through the first curved surface, the spot shape may change to a horizontal elliptic shape shown in FIG. 4C; and after the incident beam passes through the second curved surface, the spot shape may change to a vertical elliptic shape shown in FIG. 4D.

It should be noted that there is at least one first curved surface, and there is at least one second curved surface. Regardless of a quantity of first curved surfaces, bending directions of these curved surfaces are the same, in other words, the first curved surfaces are all curved around a first direction. When there are a plurality of second curved surfaces, bending directions of the plurality of second curved surfaces are the same, in other words, the second curved surfaces are all curved around a second direction. In other words, the first curved surfaces and the second curved surfaces jointly implement shaping the optical signal.

FIG. 3A to FIG. 3C show only three possible structures of the wavelength selective device provided in embodiments of this application. Actually, the wavelength selective device provided in embodiments of this application may be implemented by using different structures. The following describes a plurality of wavelength selective devices of different structures and a working process of the wavelength selective device with reference to the accompanying drawings.

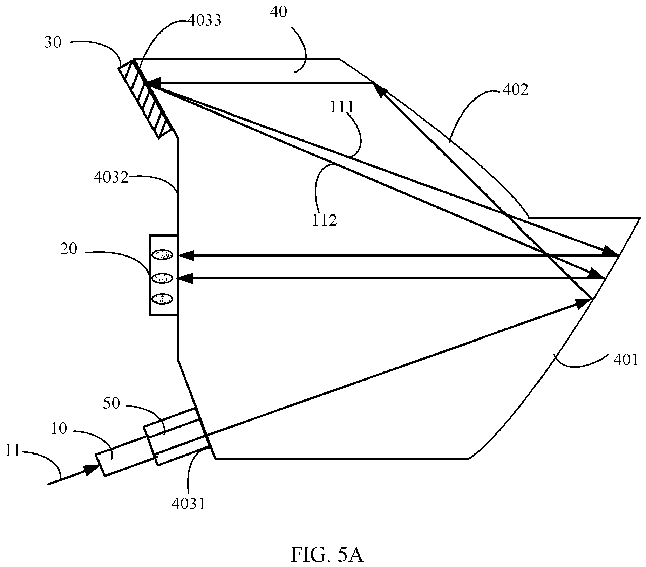

As shown in FIG. 5A, a wavelength selective device includes an input/output array 10, a switching control assembly 20, a dispersion device 30, an optical polyhedron 40, and a fastening device 50. The optical polyhedron includes a first curved surface 401, a second curved surface 402, a first light-transmission surface 4031, a second light-transmission surface 4032, and a third light-transmission surface 4033. The input/output array 10 may be mounted on the first light-transmission surface 4031 of the optical polyhedron 40 via the fastening device 50. The switching control assembly 20 may be glued through glue or bonded to the second light-transmission surface 4032 of the optical polyhedron 40. The dispersion device 30 may be mounted on the third light-transmission surface 4033 of the optical polyhedron in a bonding or gluing manner.

In this embodiment of this application, optical signals that are output from the input/output array 10, the switching control assembly 20, and the dispersion device 30 may enter the optical polyhedron 40 through the first light-transmission surface 403, the second light-transmission surface 404, and the third light-transmission surface 405. The optical signals transmitted in the optical polyhedron 40 may be shaped and direction-changed by the first curved surface 401 and the second curved surface 402.

In embodiments of this application, the bonding manner may be that two surfaces are integrated through a material intermolecular force. In this way, the dispersion device 30, the input/output array 10, the switching control assembly 20, and the optical polyhedron 40 form a whole. There is no air between optical interfaces, and an optical path is enclosed in an interior of a medium and is propagated in the interior of the medium.

A working process of the wavelength selective device shown in FIG. 5A may include: A multi-wavelength optical signal 11 is input from an input port of the input/output array 10, enters the optical polyhedron 40 through the spacing fixture 50 and the first light-transmission surface 4031, is incident to the first curved surface 401, is shaped by the first curved surface 401 and then reflected to the second curved surface 402, and is shaped by the second curved surface 402 and then reflected to the dispersion device 30. The multi-wavelength optical signal 11 successively passes through the first curved surface 401 and the second curved surface 402 in the optical polyhedron 40, and is successively shaped by the two curved surfaces in a dispersion direction and a port direction, to complete spot change in the two directions in the interior of the optical polyhedron 40. The multi-wavelength optical signal 11 incident to the dispersion device 30 may be dispersed (for example, diffracted) by the dispersion device 30 into a plurality of optical signals with different wavelengths. As shown in FIG. 5A, in an example, an optical signal 111 and an optical signal 112 with different wavelengths are obtained through diffraction. The optical signal 111 and the optical signal 112 are transmitted in the optical polyhedron 40, shaped by the first curved surface 401, and reflected to the switching control assembly 20. In this embodiment of this application, to reduce a use area of the switching control assembly 20 and reduce a volume of the entire device, the optical signals with different wavelengths are changed by the first curved surface 401 into optical signals having elliptical spots whose minor axes are the dispersion direction, and then are incident to the switching control assembly 20.

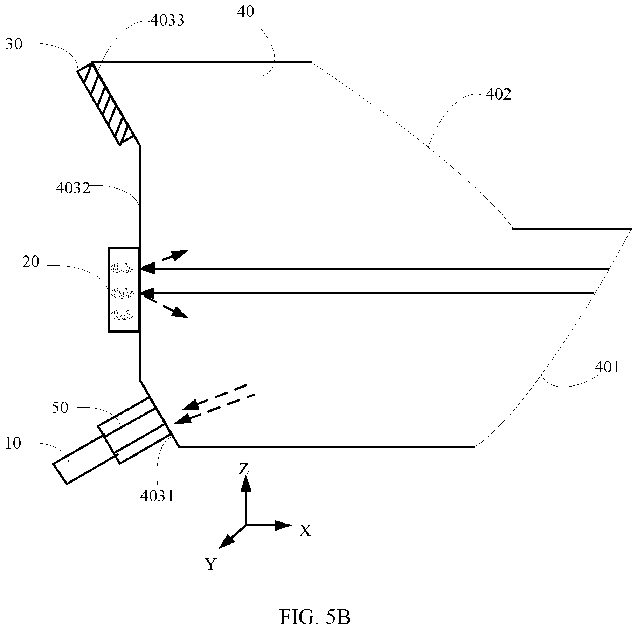

When any wavelength needs to be selectively output to a specific output port for output, a specific voltage is applied to an LCOS in a spot coverage area of an optical signal with the wavelength, and a reflected optical signal returns to the optical polyhedron 40 at a modulated angle. For an optical signal reflected from the switching control assembly 20, refer to FIG. 5B for understanding.

As shown in FIG. 5B, two optical signals reflected from the switching control assembly 20 may return to the optical polyhedron 40 at different modulated angles, or may return to the optical polyhedron 40 at a same modulated angle. The two optical signals that return to the optical polyhedron 40 at different modulated angles and that are shown in FIG. 5B are usually located on a plane perpendicular to a paper. One of the two optical signals may be perpendicular to the paper and facing inward, and the other may be perpendicular to the paper and facing outward.

The two optical signals are first reflected by the first curved surface 401 to the dispersion device 30, reflected by the dispersion device 30 to the second curved surface 402, then reflected by the second curved surface 402 to the first curved surface 401, then reflected by the first curved surface 401 to different output ports of the input/output array 10, and output from the corresponding output ports, to implement a wavelength selective switching function.

In a reverse transmission process of the optical signal in FIG. 5B, a transmission path of the optical signal reflected by the switching control assembly 20 in the interior of the optical polyhedron 40 is opposite to an incident optical path. A deflection angle change of the two optical signals is converted into a position change in a port direction when the two optical signals are reflected by the second curved surface 402. The two optical signals are restored by the first curved surface 401 to collimated beams, are emergent from the first light-transmission surface 4031 of the optical polyhedron 40, and are output from output ports at different positions, to implement the wavelength selective switching function. It should be noted that, in this embodiment of this application, that a transmission path of the optical signal reflected by the switching control assembly 20 in the interior of the optical polyhedron 40 is the same as an incident optical path means that a sequence of assemblies through which a returned optical signal passes is opposite to that of an incident optical signal.

It should be noted that optical signals incident to two different output ports are parallel to each other, and the two parallel optical signals are located on the plane, perpendicular to the paper, shown in FIG. 5B. In an example of XYZ axes, output ports are arranged in parallel on an XY plane; and if the paper is an XZ plane, the two optical signals incident to different output ports may be located on the XY plane.

In this embodiment of this application, to reduce a reflection range that needs to be modulated by the switching control assembly 20, so that an optical signal can be approximately perpendicularly incident to the input/output array 10, the first curved surface 401 has a specific tilt angle. For example, in this embodiment of this application, the first curved surface 401 is tilted at an angle of 5° to 15°, for example, 8.5°, relative to the first light-transmission surface 4031 on which the input/output array 10 is mounted.

To maximize angular dispersion of the dispersion device 30, an angle used for incidence to the dispersion device 30 is close to an optimal incident angle. The second curved surface 402 also has a specific tilt angle. For example, in this embodiment of this application, the second curved surface 402 is tilted at an angle of 110° to 120°, for example, 115.8°, relative to the first light-transmission surface on which the input/output array 10 is mounted.

It should be noted that, in this embodiment of this application, the tilt angles of the second curved surface 402 and the first curved surface 401 are not limited in this application provided that the angles are properly set based on a component volume, a port quantity, and an optical component attachment position.

In conclusion, in the wavelength selective device provided in this application, different surfaces of the optical polyhedron and with curvatures in the dispersion direction and the port direction are used, so that spot change of a beam in two directions is completed when an optical signal is propagated in the interior of the optical polyhedron and reflected by the different surfaces of the optical polyhedron. In this way, main beam change in the wavelength selective device is completed by only one polyhedron prism, and there is no need for a plurality of discrete optical components such as lenses, so that a quantity of optical components is greatly reduced, and module assembly time is shortened. In addition, because the polyhedron may use an integrated molding processing technology, for example, one-time molding such as molding, injection molding, and grinding, component processing time is greatly shortened, and costs are reduced. Furthermore, a polarization control assembly and an input/output assembly are glued and/or bonded to the optical polyhedron to form an integrated wavelength selective device, so that an optical signal propagation process is enclosed in a medium as a whole, and an optical signal does not need to pass through an interface between the air and the medium for a plurality of times, to resolve a problem that a beam propagation path deviates with a change of ambient atmospheric pressure, and avoid an impact of moisture and dust in the air on optical path performance, thereby greatly improving stability of the wavelength selective device, and reducing costs of the wavelength selective device.

In embodiments of this application, an optical signal with each wavelength has two polarization states. Generally, an LCOS modulator can modulate an optical signal in only one of the polarization states. Therefore, a polarization optical splitting component needs to first split the optical signal with each wavelength into optical signals in the two polarization states, and then the modulator modulates an optical signal that is in a polarization state and that can be processed.

The polarization optical splitting component may be mounted in a switching control assembly. The switching control assembly includes a modulator and the polarization optical splitting component.

The polarization optical splitting component is configured to split an optical signal with each wavelength in a plurality of optical signals with different wavelengths into an optical signal in a first polarization state and an optical signal in a second polarization state. The optical signal in the first polarization state may be modulated by the modulator. The first polarization state and the second polarization state may be perpendicular to each other, or may not be perpendicular to each other.

The modulator is configured to modulate the optical signal in the first polarization state.

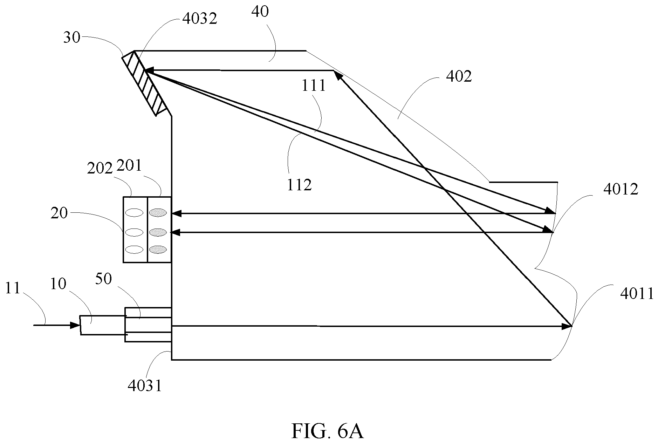

For the wavelength selective device of this structure, refer to FIG. 6A for understanding. As shown in FIG. 6A, a wavelength selective device includes an input/output array 10, a switching control assembly 20, a dispersion device 30, an optical polyhedron 40, and a fastening device 50. The optical polyhedron 40 may include two first curved surfaces: a first curved surface 4011 and a first curved surface 4012. The optical polyhedron 40 further includes a second curved surface 402, a first light-transmission surface 4031, and a second light-transmission surface 4032. The input/output array 10 is mounted on the first light-transmission surface 4031 via the fastening device 50. The switching control assembly 20 may be glued through glue or bonded to the first light-transmission surface 4031. The dispersion device 30 may be mounted on the second light-transmission surface 4032 of the optical polyhedron in a gluing or bonding manner.

In this embodiment of this application, optical signals that are output from the input/output array 10, the switching control assembly 20, and the dispersion device 30 may enter the optical polyhedron 40 through the first light-transmission surface 4031 and the second light-transmission surface 4032. The optical signal transmitted in the optical polyhedron 40 may be shaped and reflected by the first curved surface 4011, the second curved surface 402, and the first curved surface 4012.

A working process of the wavelength selective device shown in FIG. 6A may include: A multi-wavelength optical signal 11 is input from an input port of the input/output array 10, enters the optical polyhedron 40 through the fastening device 50 and the first light-transmission surface 4031, is incident to the first curved surface 4011, is shaped by the first curved surface 4011 and then reflected to the second curved surface 402, and is shaped by the second curved surface 402 and then reflected to the dispersion device 30. The multi-wavelength optical signal 11 successively passes through the first curved surface 4011 and the second curved surface 402 in the optical polyhedron 40, and is successively shaped by the first curved surface 4011 and the second curved surface 402 in a dispersion direction and a port direction, to complete spot change in the two directions in an interior of the optical polyhedron 40. The multi-wavelength optical signal 11 incident to the dispersion device 30 may be dispersed (for example, diffracted) by the dispersion device 30 into a plurality of optical signals with different wavelengths. As shown in FIG. 6A, an optical signal 111 and an optical signal 112 with different wavelengths are obtained through diffraction. The optical signal 111 and the optical signal 112 are transmitted in the optical polyhedron 40, shaped by the first curved surface 4012, and reflected to the switching control assembly 20. In this embodiment of this application, to reduce a use area of the switching control assembly 20 and reduce a volume of the entire device, the optical signals with different wavelengths are changed by the first curved surface 4012 into optical signals having elliptical spots whose minor axes are the dispersion direction, and then are incident to the switching control assembly 20.

A polarization optical splitting component 201 in the switching control assembly 20 splits the optical signal 111 and the optical signal 112 with different wavelengths into optical signals in two different polarization state directions. The two polarization states may be referred to as a first polarization state and a second polarization state. An optical signal in the first polarization state may be modulated by a modulator. A modulator 202 modulates an optical signal in the first polarization state in the optical signal 111, and modulates an optical signal in the first polarization state in the optical signal 112.

If the switching control assembly 20 further includes a polarization conversion component, the polarization conversion component is configured to convert the optical signal in the second polarization state into the optical signal in the first polarization state.

In this possible implementation, the polarization conversion component may be a wave plate, and the wave plate may be a half-wave plate, a quarter-wave plate, or a wave plate having another retardance. The wave plate may convert the optical signal in the second polarization state into the optical signal in the first polarization state. In this way, an optical signal that is in a polarization state and that cannot be processed by the modulator can be converted into an optical signal that is in a polarization state and that can be processed by the modulator, and two processed optical signals continue to be transmitted, so that a reflection amount of the optical signals can be increased.

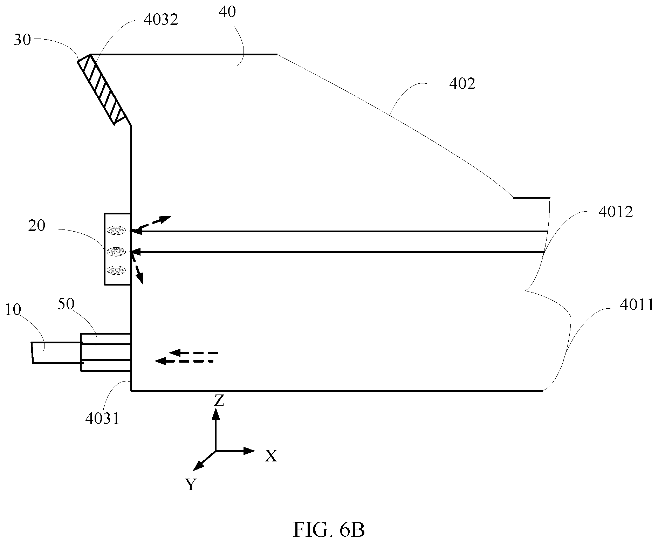

When any wavelength needs to be selectively output to a specific port for output, a specific voltage is applied to an LCOS in a spot coverage area of a beam with the wavelength, and a reflected optical signal returns to the optical polyhedron 40 at a modulated angle. For an optical signal reflected from the switching control assembly 20, refer to FIG. 6B for understanding. As shown in FIG. 6B, two optical signals reflected from the switching control assembly 20 return to the optical polyhedron 40 at different modulated angles. The two optical signals that return to the optical polyhedron 40 at different modulated angles and that are shown in FIG. 6B are usually located on a plane perpendicular to a paper. One of the two optical signals may be perpendicular to the paper and facing inward, and the other may be perpendicular to the paper and facing outward.

The two optical signals shown in FIG. 6B are first shaped by the first curved surface 4012 and reflected to the dispersion device 30, reflected by the dispersion device 30 to the second curved surface 402, then shaped by the second curved surface 402 and reflected to the first curved surface 4011, then shaped by the first curved surface 4011 and reflected to different output ports of the input/output array 10, and output from the corresponding output ports, to implement a wavelength selective switching function.

In a reverse transmission process of the optical signal in FIG. 6B, a transmission path of the optical signal reflected by the switching control assembly 20 in an interior of the optical polyhedron 40 is opposite to an incident optical path. A deflection angle change between the two optical signals is converted into a position change in a port direction when the two optical signals are shaped and reflected by the second curved surface 402. The two optical signals are restored by the first curved surface 401 to collimated beams, are emergent from the first light-transmission surface 4031 of the optical polyhedron 40, and are output from output ports at different positions, to implement the wavelength selective switching function. It should be noted that, in this embodiment of this application, that a transmission path of the optical signal reflected by the switching control assembly 20 in the interior of the optical polyhedron 40 is the same as an incident optical path means that a sequence of assemblies through which a returned optical signal passes is opposite to that of an incident optical signal.

It should be noted that optical signals incident to two different output ports are parallel to each other, and the two parallel optical signals are located on the plane, perpendicular to the paper, shown in FIG. 6B. In an example of XYZ axes, output ports are arranged in parallel on an XY plane; and if the paper is an XZ plane, the two optical signals incident to different output ports may be located on the XY plane.

In the structure described in FIG. 6A, the polarization optical splitting component is included in the polarization optical splitting component. Actually, the polarization optical splitting component may alternatively be included in the input/output array. A possible case may be as follows: The input/output array includes an input/output assembly and a polarization optical splitting component. The input/output assembly is configured to receive a multi-wavelength optical signal. The polarization optical splitting component is configured to split the multi-wavelength optical signal into two multi-wavelength optical signals in polarization states that are perpendicular to each other.

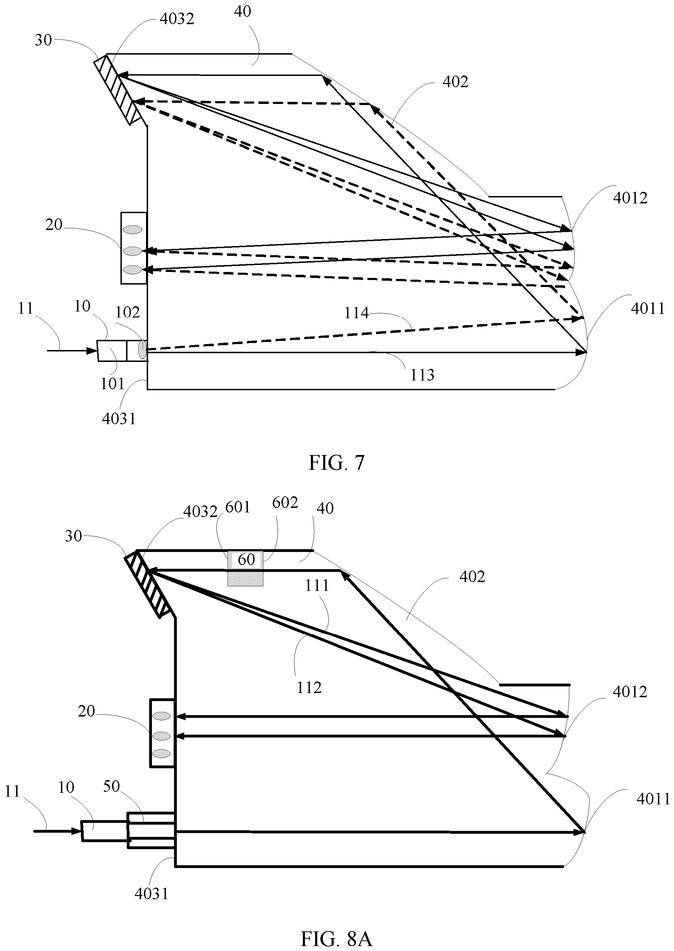

For a possible structure of the wavelength selective device, refer to FIG. 7 for understanding. As shown in FIG. 7, a wavelength selective device includes an input/output array 10, a switching control assembly 20, a dispersion device 30, and an optical polyhedron 40. The optical polyhedron may include a first curved surface 4011, a first curved surface 4012, a second curved surface 402, a first light-transmission surface 4031, and a second light-transmission surface 4032. The input/output array 10 may be glued or bonded to the first light-transmission surface 4031 of the optical polyhedron 40. The input/output array 10 includes an input/output assembly 101 and a polarization optical splitting component 102. The switching control assembly 20 may be glued through glue or bonded to the first light-transmission surface 4031 of the optical polyhedron 40. The dispersion device 30 may be mounted on the second light-transmission surface 4032 of the optical polyhedron in a gluing or bonding manner.

In this embodiment of this application, optical signals output from the input/output array 10, the switching control assembly 20, and the dispersion device 30 may enter the optical polyhedron 40 through the first light-transmission surface 4031 and the second light-transmission surface 4032. The optical signal transmitted in the optical polyhedron 40 may be reflected by the first curved surface 4011, the second curved surface 402, and the first curved surface 4012.

A working process of the wavelength selective device shown in FIG. 7 may include: A multi-wavelength optical signal 11 is input from an input port of the input/output assembly 101 of the input/output array 10, and is split by the polarization optical splitting component 102 into an optical signal in a third polarization state and an optical signal in a fourth polarization state. The optical signal in the third polarization state is capable of being modulated by a modulator in the switching control assembly. Both the optical signal in the third polarization state and the optical signal in the fourth polarization state are multi-wavelength optical signals, and are an optical signal 113 and an optical signal 114. For example, the optical signal 113 is the multi-wavelength optical signal in the third polarization state, and the optical signal 114 is the multi-wavelength optical signal in the fourth polarization state. The third polarization state and the fourth polarization state may be perpendicular to each other, or may not be perpendicular to each other.

The multi-wavelength optical signals in the two different polarization states are incident to the first curved surface 4011, shaped by the first curved surface 4011 and then reflected to the second curved surface 402, and shaped by the second curved surface 402 and then reflected to the dispersion device 30. The optical signal 113 and the optical signal 114 successively pass through the first curved surface 4011 and the second curved surface 402 in the optical polyhedron 40, and is successively shaped by the first curved surface 4011 and the second curved surface 402 in a dispersion direction and a port direction, to complete spot change in the two directions in an interior of the optical polyhedron 40. The multi-wavelength optical signal 113 and the multi-wavelength optical signal 114 that are incident to the dispersion device 30 may be dispersed (for example, diffracted) by the dispersion device 30 into a plurality of optical signals with different wavelengths. As shown in FIG. 7, the optical signal 113 and the optical signal 114 each are diffracted into one pair of optical signals with different wavelengths. Such two pairs of optical signals with different wavelengths are transmitted in the optical polyhedron 40, and are reflected by the first curved surface 4012 to the switching control assembly 20. In this embodiment of this application, to reduce a use area of the switching control assembly 20 and reduce a volume of the entire device, the optical signals with different wavelengths are changed by the first curved surface 4012 into optical signals having elliptical spots whose minor axes are the dispersion direction, and then are incident to the switching control assembly 20.

If the switching control assembly 20 may further include a polarization conversion component, the polarization conversion component may convert the optical signal in the fourth polarization state into the optical signal in the third polarization state.

In this possible implementation, the polarization conversion component may be a wave plate, and the wave plate may be a half-wave plate or a quarter-wave plate. The wave plate may convert the optical signal in the fourth polarization state into the optical signal in the third polarization state. In this way, an optical signal that is in a polarization state and that cannot be processed by the modulator can be converted into an optical signal that is in a polarization state and that can be processed by the modulator, and two processed optical signals continue to be transmitted, so that a reflection amount of the optical signals can be increased.

When any wavelength needs to be selectively output to a specific port for output, a specific voltage is applied to an LCOS in a spot coverage area of a beam with the wavelength, and a reflected optical signal returns to the optical polyhedron 40 at a modulated angle. For the optical signal reflected from the switching control assembly 20, refer to the process described in FIG. 6B for understanding.

This application further provides a wavelength selective device of another possible structure. A wavelength selective device shown in FIG. 8A includes an input/output array 10, a switching control assembly 20, a dispersion device 30, an optical polyhedron 40, and a fastening device 50. The optical polyhedron may include a first curved surface 4011, a first curved surface 4012, a second curved surface 402, a first light-transmission surface 4031, and a second light-transmission surface 4032.

The input/output array 10 may be mounted on the first light-transmission surface 4031 of the optical polyhedron 40 via the fastening device 50. The switching control assembly 20 may be glued through glue or bonded to the first light-transmission surface 4031 of the optical polyhedron 40. The dispersion device 30 may be mounted on the second light-transmission surface 4032 of the optical polyhedron in a gluing or bonding manner.

The optical polyhedron 40 further includes a light-transmission body 60. The light-transmission body 60 is located on an optical path on which a multi-wavelength optical signal is reflected from the second curved surface 402 to the dispersion device. In the light-transmission body 60, both surfaces 601 and 602 through which a multi-wavelength optical signal passes are curved surfaces, or one surface may be a curved surface, and the other surface may be a plane. Both the curved surface 601 and the curved surface 602 are second curved surfaces.

In this embodiment of this application, optical signals that are output from the input/output array 10, the switching control assembly 20, and the dispersion device 30 may enter the optical polyhedron 40 through the first light-transmission surface 4031 and the second light-transmission surface 4032. The optical signal transmitted in the optical polyhedron 40 may be reflected by the first curved surface 4011, the second curved surface 402, and the first curved surface 4012.

A working process of the wavelength selective device shown in FIG. 8A may include: A multi-wavelength optical signal 11 is input from an input port of the input/output array 10, enters the optical polyhedron 40 through the fastening device 50 and the first light-transmission surface 4031, is incident to the first curved surface 4011, is shaped by the first curved surface 4011 and then reflected to the second curved surface 402, and is shaped and then reflected by the second curved surface 402, and a reflected multi-wavelength optical signal passes through the two curved surfaces 601 and 602 of the light-transmission body 60 and is incident to the dispersion device 30. The multi-wavelength optical signal 11 successively encounters the first curved surface 4011 and the second curved surface 402 and passes through the curved surface 601 and the curved surface 602 in the optical polyhedron 40, and is successively shaped by the first curved surface 4011, the second curved surface 402, the curved surface 601, and the curved surface 602 in a dispersion direction and a port direction, to complete spot change in the two directions in an interior of the optical polyhedron 40. The multi-wavelength optical signal 11 incident to the dispersion device 30 is dispersed (for example, diffracted) by the dispersion device 30 into a plurality of optical signals with different wavelengths. As shown in FIG. 8A, an optical signal 111 and an optical signal 112 with different wavelengths are obtained through diffraction. The optical signal 111 and the optical signal 112 are transmitted in the optical polyhedron 40, and reflected by the first curved surface 4012 to the switching control assembly 20. In this embodiment of this application, to reduce a use area of the switching control assembly 20 and reduce a volume of the entire device, the optical signals with different wavelengths are changed by the first curved surface 4012 into optical signals having elliptical spots whose minor axes are the dispersion direction, and then are incident to the switching control assembly 20.

For a process in which an optical signal emergent from the switching control assembly 20 is transmitted to an output port, refer to the foregoing descriptions in FIG. 6A and FIG. 6B for understanding, except that the optical signal passes through the curved surface 601 and the curved surface 602 in transmission.

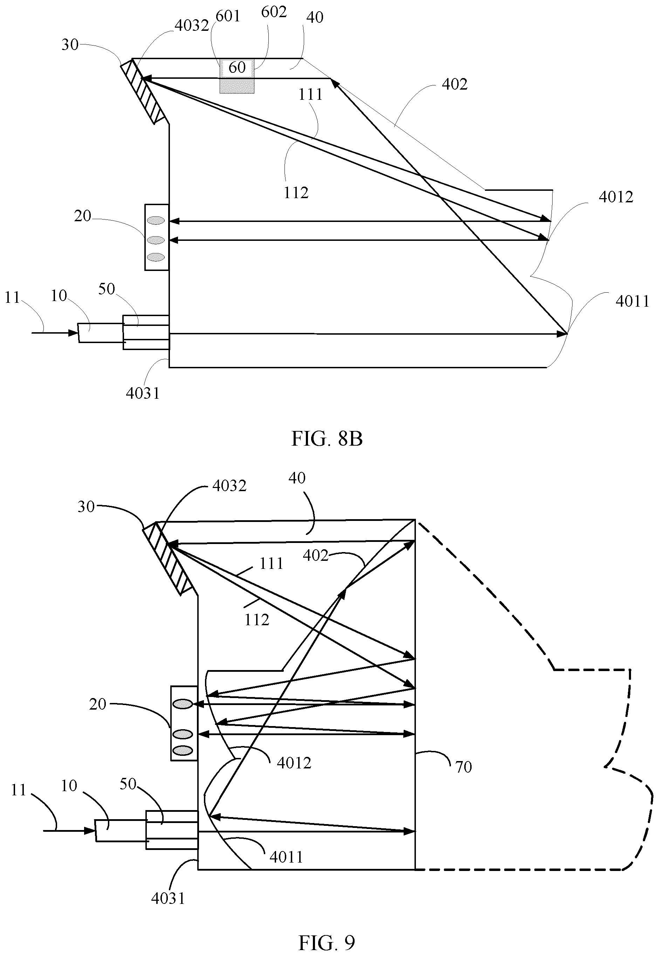

In a structure shown in FIG. 8B, the second curved surface 402 is changed to a plane, and is only used as a reflective surface and no longer has an optical signal conversion capability. Other structures are the same as those in FIG. 8A.

The light-transmission body 60 in FIG. 8A and FIG. 8B may contain air, or may contain another light-transmission medium. In this way, a joint beam change effect of a change of a refractive index and a curved surface curvature can be used to form modulation optical functions in the dispersion direction and the port direction. Because a curved surface is in a form of transmission, the curved surface may be designed to be located on a propagation path of an optical path, to reduce a quantity of reflections of the optical path, and reduce a length of the optical path, thereby facilitate reducing a transmission loss of the optical path.

In the wavelength selective device described above, the input/output array, the switching control assembly, and the dispersion device are all located on at least one light-transmission surface that is on a same side of the optical polyhedron, and the second curved surface and the first curved surfaces are basically located on an opposite side of the at least one light-transmission surface. A structure of the wavelength selective device can improve reflection efficiency of an optical signal in the interior of the optical polyhedron, so that an optical signal with a corresponding wavelength can be quickly selected.

To reduce a length of the wavelength selective device, the wavelength selective device of a plurality of structures described above may be alternatively folded into a two-layer structure. In this way, the second curved surface and the first curved surface, and the at least one light-transmission surface are respectively located at two layers: an upper layer and a lower layer. One or more reflective surfaces may be disposed on an opposite side of the at least one light-transmission surface, and optical signal transmission at the upper layer and the lower layer is implemented through the reflective surface.

For an example structure of the wavelength selective device of the two-layer structure, refer to FIG. 9 for understanding. A wavelength selective device shown in FIG. 9 includes an input/output array 10, a switching control assembly 20, a dispersion device 30, an optical polyhedron 40, and a fastening device 50. The optical polyhedron may include a first curved surface 4011, a first curved surface 4012, a second curved surface 402, a first light-transmission surface 4031, and a second light-transmission surface 4032.

The optical polyhedron 40 may have two layers. The input/output array 10, the switching control assembly 20, and the dispersion device 30 may be located at a first layer. The second curved surface 402, the first curved surface 4011, and the first curved surface 4012 may be located at a second layer. The first layer may be an upper layer or a lower layer. The second layer may be a lower layer or an upper layer.

The optical polyhedron 40 further includes a reflective surface 70. The reflective surface 70 is located on an opposite side of the second curved surface 402, the first curved surface 4011, the first curved surface 4012, the first light-transmission surface 4031, and the second light-transmission surface 4032. The reflective surface 70 may implement optical signal transmission at the upper layer and the lower layer.

A working process of the wavelength selective device shown in FIG. 9 may include: A multi-wavelength optical signal 11 is input from an input port of the input/output array 10, enters the optical polyhedron 40 through the fastening device 50 and the first light-transmission surface 4031, is incident to the reflective surface 70, is reflected by the reflective surface 70 to the first curved surface 4011, is shaped by the first curved surface 4011 and then reflected to the second curved surface 402, is shaped by the second curved surface 402 and then reflected to the reflective surface 70, and is reflected by the reflective surface 70 to the dispersion device 30. The multi-wavelength optical signal 11 successively passes through the first curved surface 4011 and the second curved surface 402 in the optical polyhedron 40, and is successively shaped by the first curved surface 4011 and the second curved surface 402 in a dispersion direction and a port direction, to complete spot change in the two directions in an interior of the optical polyhedron 40. The multi-wavelength optical signal 11 incident to the dispersion device 30 may be dispersed (for example, diffracted) by the dispersion device 30 into a plurality of optical signals with different wavelengths. As shown in FIG. 9, an optical signal 111 and an optical signal 112 with different wavelengths are obtained through diffraction. The optical signal 111 and the optical signal 112 are transmitted in the optical polyhedron 40, reflected by the reflective surface 70 to the first curved surface 4012, and reflected by the first curved surface 4012 to the switching control assembly 20. In this embodiment of this application, to reduce a use area of the switching control assembly 20 and reduce a volume of the entire device, the optical signals with different wavelengths are changed by the first curved surface 4012 into optical signals having elliptical spots whose minor axes are the dispersion direction, and then are incident to the switching control assembly 20.

For a process in which an optical signal emergent from the switching control assembly 20 is transmitted to an output port, refer to the foregoing descriptions in FIG. 6A and FIG. 6B for understanding, except that an optical signal transmitted between the upper and lower layers needs to be reflected by the reflective surface 70 to implement optical signal transmission between the upper and lower layers.

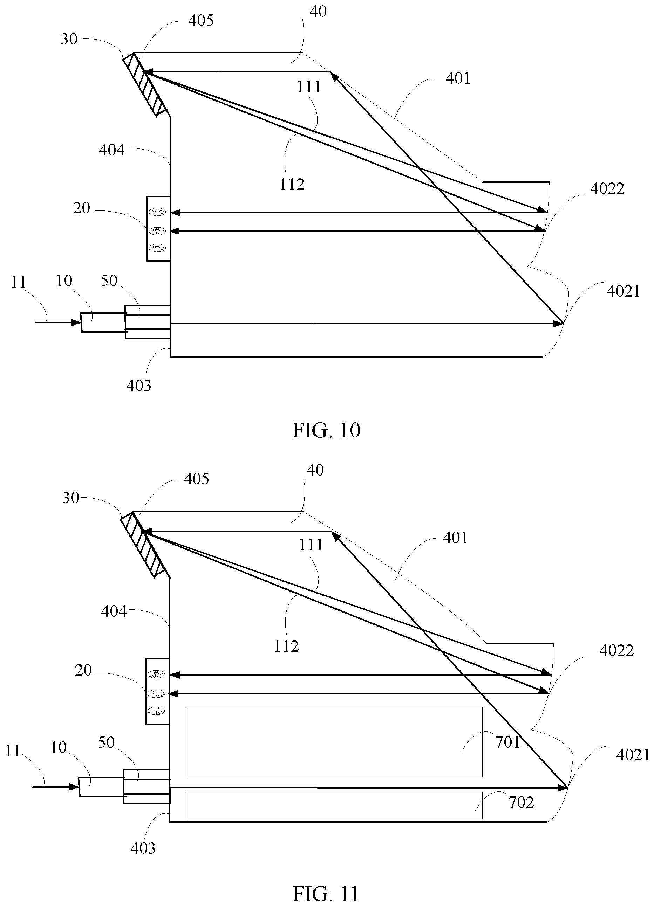

This application further provides a wavelength selective device of another possible structure. As shown in FIG. 10, the dispersion device 30 is a curved-surface grating. The curved-surface grating is a grating that can implement both dispersion and focusing functions. The curved-surface grating may be a grating having a curved grating line on a flat plate substrate, or may be a grating having a straight grating line on a bent substrate material. In FIG. 10, the curved-surface grating may function as the second curved surface. When the dispersion device 30 is a curved-surface grating, the optical polyhedron 40 may include only the first curved surface. For this case, refer to FIG. 3A for understanding. Certainly, even if the dispersion device 30 is a curved-surface grating, the optical polyhedron 40 may also include the second curved surface.

When the dispersion device 30 is a curved-surface grating, if the optical polyhedron includes the light-transmission body shown in FIG. 8A and FIG. 8B, and the light-transmission body contains air, the curved-surface grating may be further glued or bonded to the light-transmission body.

In the wavelength selective device of any one of the foregoing possible structures, an interior of the optical polyhedron 40 may be set to be hollow at a position through which no optical signal passes, such as a hollow part 701 and a hollow part 702 in FIG. 11. The hollow part may be implemented by hollowing out a medium through which the optical signal does not pass and that is in the optical polyhedron. To be specific, in an integrated molding process such as an injection molding process, a mold may be shaped as a convex form at a hollowed position. In this way, when an integrated dielectric material is made, a material quantity of a device can be reduced, and costs can be reduced.

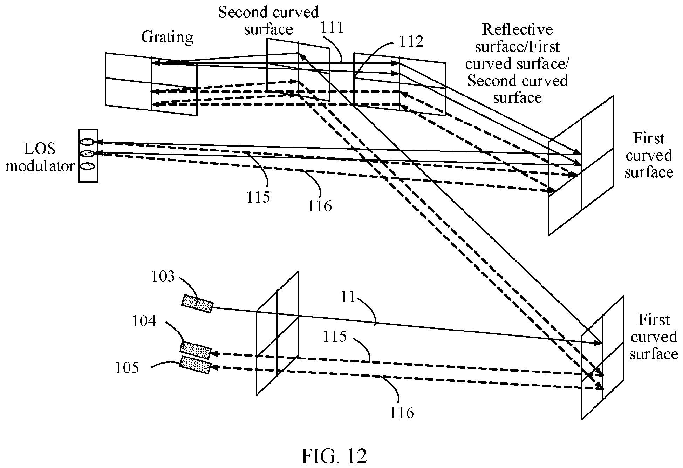

If an incident optical path and a reverse emergent optical path of the wavelength selective device are represented in a same diagram, the incident optical path and the reverse emergent optical path may be understood with reference to a simulation optical path diagram shown in FIG. 12. It should be noted that, in the simulation optical path diagram, only a position at which an optical signal is reflected in the optical polyhedron is provided, and a structure of the optical polyhedron is not drawn.

As shown in FIG. 12, a multi-wavelength optical signal 11 is input to an optical polyhedron through an input port 103, shaped on a first curved surface and then reflected by the first curved surface to a second curved surface, shaped by the second curved surface and then reflected to a grating, and dispersed by the grating into an optical signal 111 and an optical signal 112. The optical signal 111 and the optical signal 112 are reflected by a reflective surface to the first curved surface, and shaped by the first curved surface and then reflected to an LCOS modulator. The LCOS modulator modulates the optical signal 111 and the optical signal 112, and then outputs an optical signal 115 and an optical signal 116 at different modulated angles. The optical signal 115 and the optical signal 116 are first shaped by the first curved surface and then reflected to the reflective surface, reflected by the reflective surface to the grating, reflected by the grating to the second curved surface, shaped by the second curved surface and then reflected back to the first curved surface, and collimated by the first curved surface and then reflected to an output port 104 and an output port 105, respectively.

It should be noted that the reflective surface in FIG. 12 may alternatively be the second curved surface or the first curved surface.

For both an incident process and an emergent process of an optical signal in the wavelength selective device of the plurality of structures above, refer to a schematic process in FIG. 12 for understanding.

The foregoing descriptions are merely specific implementations of embodiments of this application, but are not intended to limit the protection scope of embodiments of this application.

## Claims

1. A wavelength selective device, comprising an input/output array, a switching control assembly, a dispersion device, and an optical polyhedron, wherein the optical polyhedron comprises a first curved surface and at least one light-transmission surface, and the input/output array, the switching control assembly, and the dispersion device are mounted on the at least one light-transmission surface;
the input/output array is configured to: input a multi-wavelength optical signal to the optical polyhedron, and receive at least one single-wavelength optical signal from the optical polyhedron;
the switching control assembly is configured to modulate an optical signal incident to the switching control assembly;
the dispersion device is configured to disperse an optical signal incident to the dispersion device; and
the first curved surface is configured to shape and change a direction of an optical signal incident to the first curved surface.

2. The wavelength selective device according to claim 1, wherein the optical polyhedron comprises one light-transmission surface; and
the input/output array, the switching control assembly, and the dispersion device are mounted on the light-transmission surface.

3. The wavelength selective device according to claim 1, wherein the optical polyhedron comprises a first light-transmission surface and a second light-transmission surface; and
two of the input/output array, the switching control assembly, and the dispersion device are mounted on the first light-transmission surface, and a remaining one is mounted on the second light-transmission surface.

4. The wavelength selective device according to claim 1, wherein the optical polyhedron comprises three light-transmission surfaces; and
the input/output array, the switching control assembly, and the dispersion device are respectively mounted on different light-transmission surfaces in the three light-transmission surfaces.

5. The wavelength selective device according to any one of claims 1 to 4, wherein the optical polyhedron further comprises a second curved surface, and the second curved surface is configured to shape and change a direction of an optical signal incident to the second curved surface.

6. The wavelength selective device according to claim 5, wherein the first curved surface is curved around a first direction, the second curved surface is curved around a second direction, and the first direction is not parallel to the second direction.

7. The wavelength selective device according to claim 6, wherein the first direction is perpendicular to the second direction, or the first direction is nearly perpendicular to the second direction.

8. The wavelength selective device according to any one of claims 1 to 4, wherein the dispersion device is a curved-surface grating, and the curved-surface grating is configured to disperse and shape an optical signal incident to the curved-surface grating.

9. The wavelength selective device according to claim 8, wherein the optical polyhedron further comprises a reflective surface, and the reflective surface is configured to reflect the optical signal incident to the curved-surface grating and/or an optical signal emergent from the curved-surface grating.

10. The wavelength selective device according to any one of claims 1 to 9, wherein the input/output array, the switching control assembly, and the dispersion device are glued to, bonded to, or mounted, via a fastening device, on the at least one light-transmission surface.

11. The wavelength selective device according to any one of claims 5 to 7, wherein the optical polyhedron comprises a light-transmission body, and an outer surface of the light-transmission body is the second curved surface, or when there are a plurality of second curved surfaces, an outer surface of the light-transmission body is one of the plurality of second curved surfaces.

12. The wavelength selective device according to any one of claims 1 to 11, wherein an interior of the optical polyhedron is hollow at a position through which no optical signal passes.

13. The wavelength selective device according to any one of claims 1 to 12, wherein
the input/output array is configured to input a multi-wavelength optical signal to the optical polyhedron, wherein the multi-wavelength optical signal is reflected in the optical polyhedron to the dispersion device;
the dispersion device is configured to disperse the multi-wavelength optical signal into a plurality of optical signals with different wavelengths, wherein the plurality of optical signals with different wavelengths are reflected in the optical polyhedron to the switching control assembly; and
the switching control assembly is configured to modulate at least one single-wavelength optical signal in the plurality of optical signals with different wavelengths and then reflect a modulated single-wavelength optical signal back to the optical polyhedron, wherein the at least one single-wavelength optical signal is output from at least one output port of the input/output array.

14. The wavelength selective device according to claim 13, wherein the switching control assembly comprises a modulator and a polarization optical splitting component;
the polarization optical splitting component is configured to split an optical signal with each wavelength in the plurality of optical signals with different wavelengths into an optical signal in a first polarization state and an optical signal in a second polarization state; and
the modulator is configured to modulate the optical signal in the first polarization state.

15. The wavelength selective device according to claim 14, wherein the switching control assembly further comprises a polarization conversion component; and
the polarization conversion component is configured to convert the optical signal in the second polarization state into the optical signal in the first polarization state.

16. The wavelength selective device according to claim 13, wherein the input/output array comprises an input/output assembly and a polarization optical splitting component;
the input/output assembly is configured to receive the multi-wavelength optical signal; and
the polarization optical splitting component is configured to split the multi-wavelength optical signal into an optical signal in a third polarization state and an optical signal in a fourth polarization state, and the optical signal in the third polarization state is capable of being modulated by a modulator in the switching control assembly.

17. The wavelength selective device according to claim 16, wherein the input/output array further comprises a polarization conversion component; and
the polarization conversion component is configured to convert the optical signal in the fourth polarization state into the optical signal in the third polarization state.

18. A switching device, comprising the wavelength selective device according to any one of claims 1 to 17.
